# NEW EUROPEAN PATENT SPECIFICATION

(11) **EP 0 335 456 B2**
(45) Date of publication and mention of the opposition decision: **24.09.1997**
(45) Mention of the grant of the patent: 16.12.1992
(21) Application number: 89200748.5
(22) Date of filing: 23.03.1989
(51) Int. Cl.: A01B 49/04

(54) **A power-driven soil cultivating machine**
Mechanisch angetriebenes Bodenbearbeitungsgerät
Engin à moteur de culture de la terre

(30) Priority: 30.03.1988 NL 8800800
(43) Date of publication of application: 04.10.1989
(73) Proprietor: C. van der Lely N.V., NL-3155 PD Maasland (NL)
(72) Inventor: Bom, Cornelis Johannes Gerardus, Rozenburg (NL)
(74) Representative: Mulder, Herman

(56) References cited:
- EP-A- 0 081 222
- EP-A- 0 198 563
- EP-A- 0 199 406
- EP-A- 0 216 003
- DE-A- 1 782 749
- DE-A- 2 324 677
- DE-B- 1 279 403
- US-A- 3 128 729
- US-A- 3 224 392
- US-A- 3 265 137

## Description

The invention relates to a power-driven soil cultivating machine comprising a frame, two soil cultivating units which are disposed on either side of said frame such that the distance between the units corresponds substantially to the customary width of a tractor and connecting means for connecting the frame with the said two cultivating units at the front side of the tractor while furthermore a third soil cultivating unit is provided, for mounting at the rear side of the tractor.

EP-A-0 216 003 discloses a power driven soil cultivating machine comprising a frame, two soil cultivating units for preparing a seed bed, one being disposed on each side of the frame such that the distance between the units corresponds substantially to the customary width of a tractor. Connecting means are provided for connecting the frame, together with the two cultivating units, to the front side of a tractor and the two soil cultivating units are pivotable relative to the frame about pivot axes extending in the direction of operative travel of the machine. A third soil cultivating unit comprising a unit for preparing a seed bed is provided for mounting at the rear side of the tractor and has a working width which corresponds substantially to the spacing between the respective working widths of the two soil cultivating units. A single seed drill is located at the rear of the third unit for seeding across the total width of the soil cultivating machine.

DE-A-2 324 677 discloses a power driven soil cultivating machine comprising a frame, a soil cultivating unit for preparing a seed bed disposed to one side of the frame and connecting means for connecting the frame, together with the soil cultivating unit to the front side of a tractor. A plough is provided for mounting at the rear of a tractor. The soil cultivating unit is supported by a side portion pivotably mounted on the frame about a first axis and the soil cultivating unit is in turn pivotably mounted on the side portion about a second axis, both axes extending in the direction of operative travel of the machine. The machine is arranged such that the soil cultivating unit can be positioned by pivoting about the axes to be operated on either side of the frame.

According to a first aspect of the invention there is provided a power-driven soil cultivating machine comprising a frame, two soil cultivating units for preparing a seed bed, such as rotary harrows, which units are disposed on either side of said frame such that the distance between the units corresponds substantially to the customary width of a tractor, and connecting means for connecting the frame with the said two cultivating units at the front side of the tractor, while furthermore a third soil cultivating unit is provided for mounting at the rear side of the tractor, whereby for each soil cultivating unit at the front side of the tractor a pivotal side portion is provided to support said soil cultivating unit, as well as a first pivot axis by means of which said pivotal side portion with the soil cultivating unit can pivot in respect to the frame and a second pivot axis by means of which the soil cultivating unit can pivot in respect to the pivotal side portion, both pivot axes extending in the direction of operative travel of the machine, while furthermore the third soil cultivating unit is constituted by a plough.

According to a second aspect of the invention there is provided a power-driven soil cultivating machine comprising a frame, two soil cultivating units for preparing a seed bed, such as rotary harrows, which units are disposed on either side of said frame such that the distance between the units corresponds substantially to the customary width of a tractor, and connecting means for connecting the frame with the said two cultivating units at the front side of the tractor, while furthermore a third soil cultivating unit is provided for mounting at the rear side of the tractor, whereby for each soil cultivating unit at the front side of the tractor a pivotal side portion is provided to support said soil cultivating unit, as well as a first pivot axis by means of which said pivotal side portion with the soil cultivating unit can pivot in respect to the frame and a second pivot axis by means of which the soil cultivating unit can pivot in respect to the pivotal sided portion, both pivot axes extending in the direction of operative travel of the machine, and a common seed drill is provided for the two soil cultivating units at the front side of the tractor, which seed drill is located between the latter soil cultivating units, while furthermore the third soil cultivating unit comprises a unit for preparing a seed bed, such as a rotary harrow, which third soil cultivating unit has a working width which corresponds substantially to the spacing between the respective working widths of the two soil cultivating units.

According to both aspects, a machine combination is obtained, wherein soil cultivating units are used at both sides at the front side of the tractor and at the rear side of the tractor. Such machine combinations improve the efficiency of working the soil.

For a better understanding of the invention and to show how the same may be carried into effect, an embodiment thereof will now be described with reference to the accompanying drawings, in which:
Figure is a schematic plan view of a construction according to the invention;
Figure 2 is, to an enlarged scale, a plan view of a soil cultivating unit arranged near the front side of a tractor;

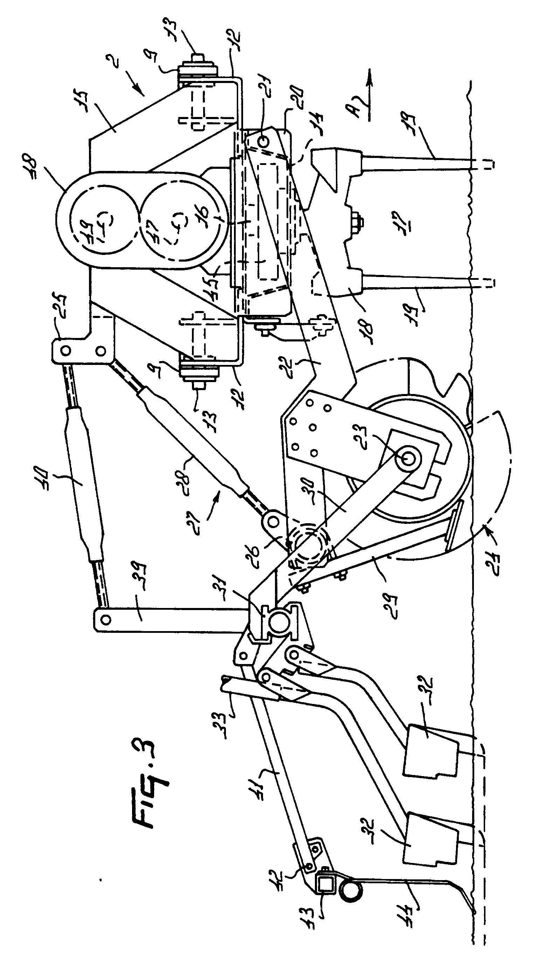

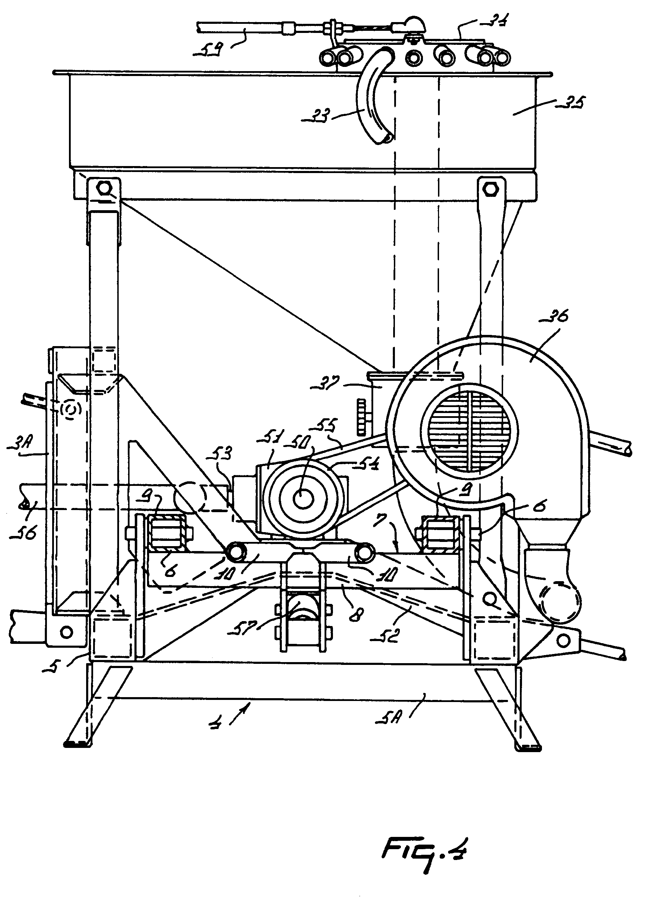

Figure 3 is, to an enlarged scale, a view taken in the direction of the arrow II in Figure 2;
Figure 4 is, to an enlarged scale, a view taken on the line IV-IV in Figure 2, and
Figure 5 is a schematic plan view of a construction according to the invention, in which the soil cultivating unit arranged at the rear of a tractor is replaced by a plough.

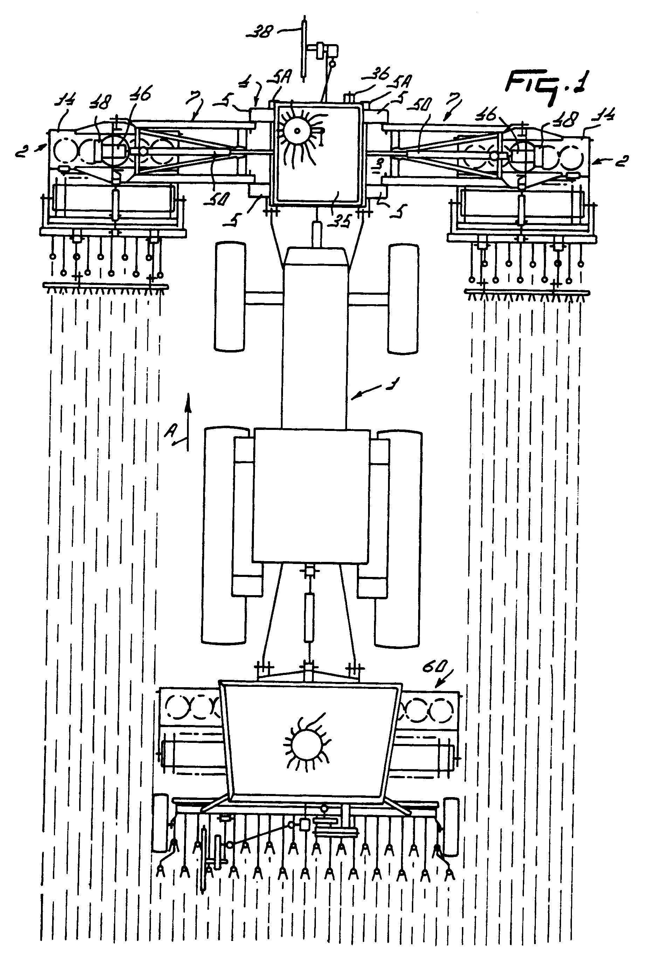

The construction according to the invention as shown in the drawings comprises a tractor 1 and two soil cultivating units 2 arranged on either side at the front of the tractor. The two units 2, which during operation cultivate a strip of soil beside the tractor, are attached to a frame 3 which is connected to the three-point lifting hitch at the front side of the tractor 1 by means of a trestle 3A comprising a three-point connection. The frame 3 has a central portion 4, at which the trestle 3A is arranged. The central portion 4 comprises two transverse beams 5 which extend at least substantially parallel to each other and at least substantially horizontally. The beams 5 are interconnected by means of cross beams 5A which extend in the direction of operative travel A. The ends of the beams 5 are provided with pivotal parts 7 by means of shafts 6 which extend in the direction of operative travel A and are in alignment. Each part 7 includes a beam 8 which extends in the direction of operative travel A and, in the region of the shafts 6, interconnects two parallel beams 9 extending parallel to the beams 5. Near its midway point, each beam 8 is fitted with two diverging supports 10 whose other ends are located near the ends of a cross beam 11 which extends parallel to the beam 8 and is arranged between the beams 9. The ends of the beams 9 of each part 7 constitute the legs of a fork, between which there is arranged pivotably by means of supports 12 and shafts 13 a box-like frame portion 14, the said shafts 13 being in alignment and extending in the direction of operative travel. The frame portion 14 extends at least substantially parallel to the beams 9 of a part 7 and constitutes part of the soil cultivating-sad drill unit 2. The shafts 13 are fastened near the lower end of a bracket 15 which is fitted on a frame portion 14 near the midway point thereof. Inside the frame portion 14 there are supported at equal interspaces of preferably 25 cms the upwardly directed, preferably vertical, shafts 16 of soil working members 17. At the ends of a shaft 16 projecting from the bottom side of the frame portion 14, each of the soil working members 17 includes a carrier 18, said carrier having near its ends downwardly extending soil working elements 19 in the form of tines. The ends of each frame portion 14 are closed by means of plates 20 which extend upwardly and at least substantially parallel to the direction of operative travel A in a vertical plane. Near their leading sides, the plates 20 are provided with a pin 21, the arrangement being such that the pins 21 are in alignment. About each of the pins 21 there is arranged an arm 22 which extends rearwardly along a plate 20. Between the ends of the arms 22 there is supported freely rotatably about shafts 23 a roller 24. Near the midway point of the frame portion 14 there is arranged between a support 25 on the bracket 15 and a cross beam 26 interconnecting the arms 22 an adjusting device 27, which device in this embodiment is constituted by a length-adjustable rod 28. With the aid of the rod 28 the arms 22 can be moved in the upward and downward direction by pivoting about the shafts 21 and be locked in a plurality of positions, the arrangement being such that this allows of a change in the position of the roller 24 relative to the soil working members and hence of an adjustment of the working depth of the soil working members. In this embodiment, the rollers 24 are packer rollers provided at their rear sides with scrapers 29 which are connected to the cross beam 26 and extend to between the crowns of cams. By means of arms 30 which are arranged pivotably about the shafts 23 of the roller 24 there is fitted behind the cross beam 26 a carrier 31, whereon seed coulters 32 are supported pivotably. Via tubes 33 the seed coulters 32 are connected to a distributor mechanism 34 of a common seed drill that with its hopper 35 is positioned on the central frame portion 4 of the frame 3. The frame portion 4 also carries a fan 36 which can be driven via a drive to be described hereinafter from the power take-off shaft at the front side of the tractor, as well as a feeding mechanism 37, with the aid of which seed material can be fed by the fan 36 from the hopper 35 to the distributor 34 which is positioned on the upper side of the hopper 35 and to which the tubes 33 are connected. The feeding mechanism 37 is driven by a step wheel 38 which is, during operation, moved over the soil during operation and is located at the front side. On the upper side of each carrier 31 there is arranged near its midway point a support 39 which is connected to the support 25 on the bracket 15 via a length-adjustable rod 40, the arrangement being such that, when the roller 24 is adjusted, the proper position of the seed coulters 32 can be set again. At some distance from its ends, each carrier 31 is provided with a rearwardly extending pivotal arm 41. Between the ends of the arms 41 there is arranged pivotably by means of transverse pins 42 a carrier 43 carrying downwardly directed resilient tines 44. The tines 44 cover the furrows made by the seed coulters 32. Inside each frame portion 14 of a unit, the shafts 16 of the soil working members 17 are fitted with a pinion 45, the arrangement being such that the pinions 45 on the shafts 16 of adjacent soil working members 17 are in driving connection with each other. Near the centre of the row of soil working members 17, the shaft 16 of a soil working member is extended upwardly and reaches to into a gear box 46. Inside the gear box 46, the extended portion is in driving connection via a bevel gear transmission with a shaft 47 which extends transversely to the direction of operative travel A and is supported in the gear box, the said shaft being in driving connection via a speed variator 48 located at the outside of the gear box 46 with a superjacent shaft 49 projecting from the gear box at the inner side thereof. The projecting end of a shaft 49 is connected via a telescopic shaft 50 to a transverse shaft 50A in a gear box 51 fitted on the central frame portion 4 by means of a support 52. The shaft 50A is connected via a bevel gear transmission to a shaft drive 53 which extends in the direction of operative travel A, and projects from the gear box 51 at the rearside. The shaft 50A projects from the outer side of the gear box 51 and carries a pulley 54, a belt 55 being provided to drive the fan 36. The rear end of the shaft 53 is connected via an intermediate shaft 56 to the power-take off shaft at the front side of the tractor 1. The spacing between the strips of soil to be cultivated by the soil cultivating units 2 on either side of the factor 1 is such that it corresponds to the customary working width of a soil cultivating unit combined with a seed drill, which combination 60 can be hitched to the rear side of the tractor by means of the three-point lifting hitch (see Figure 1).

The machine in accordance with the invention as described in the foregoing operates as follows.

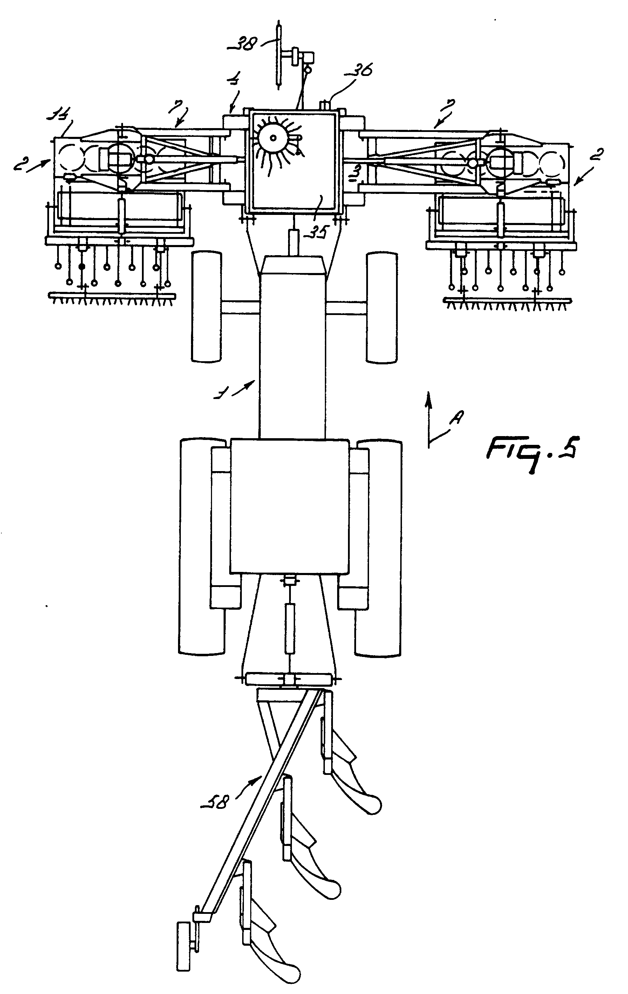

During operation, the entire assembly can be moved in a direction indicated by arrow A, the drive for the soil cultivating machines, which, in this embodiment, are rotary harrows, and the drive for the fan 36 of the seed drill on the central frame portion 4 being derived from the front side drive of the tractor 1. During travel, the soil is worked to a predetermined depth by means of the soil cultivating machines of the units 2 and seed material can be introduced directly into this worked soil via the seed shares 32. The strip of soil between the units 2 can be worked and sown by means of the soil cultivating-seed drill combination 60 hitched to the rear side of and driven from the tractor without the tractor traveling over the worked soil. Using the combination described in the foregoing, it is possible to work and sow the soil over a large width, which in this embodiment is approximately 6 metres, without the negative effect of tractor tracks. Due to the presence of the units 2 at the front side, it is possible to obtain a very uniform weight distribution which significantly increases the stability, in particular during transport. In order to be adjusted to the transport position, the soil cultivating-seed drill units 2 can be hinged upwardly about the shafts 6 by means of a hydraulic adjusting cylinder 57 (Fig. 4) which is arranged between the central frame portion 4 and a frame part 7 and is connected to the hydraulic circuit of the tractor. The lifting hitches at the front and rearsides of the tractor 1 ensure that the respective units are adjusted to the ultimate transport position. It is also possible to attach a plough 58 to the rear side of the tractor, as is shown in Figure 5. Then, a strip of soil aside the tractor, which has already been ploughed, can be worked with the soil cultivating unit 2 positioned on the ploughed field, while the other unit is lifted to some extent by means of the hydraulic adjusting cylinder 57. This also efficiently provides a counter-weight, as a result of which the steerability of the tractor is highly improved.

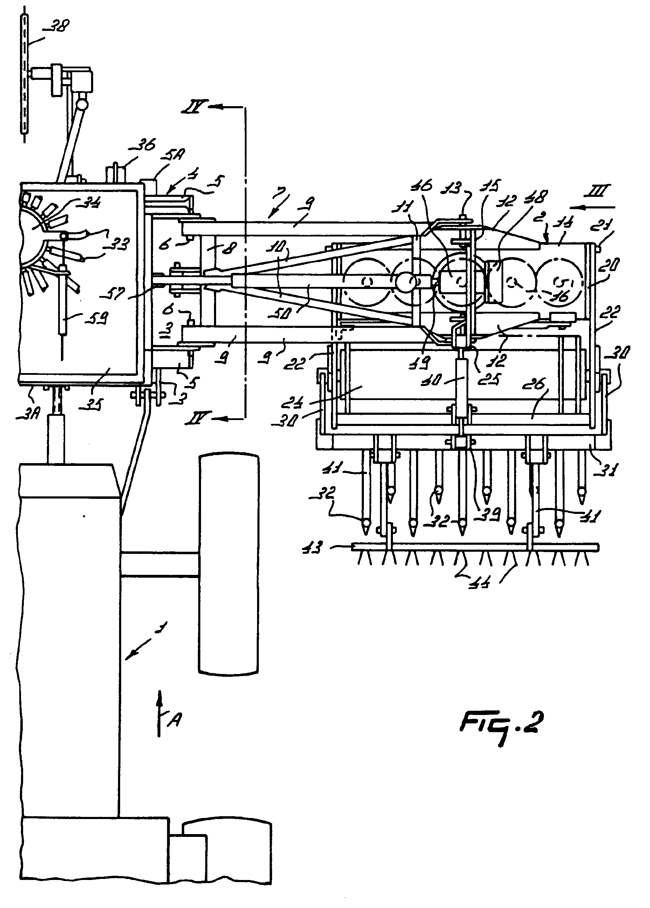

In an arrangement as shown in Figures 2 and 4, by means of a sliding part of the distributor mechanism 34, the side intended for feeding the seed to the lifted unit 2 can be closed by a Bowden cable 59 to be operated from the tractor 1, so that the seed will be transported to the seed coulters mounted to the cultivating unit that will be in operation.

The seed drill could be in operation with or without the tillage unit being in operation. The left hand unit of the machine could be in operation independently of the unit at the right hand side. The unit of the right hand side could be in operation independently of the unit of the left hand side.

## Claims

1. A power-driven soil cultivating machine comprising a frame (3), two soil cultivating units (2) for preparing a seed bed, such as rotary harrows, which units are disposed on either side of said frame (3) such that the distance between the units corresponds substantially to the customary width of a tractor (1), and connecting means (3A) for connecting the frame (3) with the said two cultivating units (2) at the front side of the tractor (1), while furthermore a third soil cultivating unit is provided for mounting at the rear side of the tractor (1), whereby for each soil cultivating unit (2) at the front side of the tractor (1) a pivotal side portion (7) is provided to support said soil cultivating unit (2), as well as a first pivot axis (6) by means of which said pivotal side portion (7) with the soil cultivating unit (2) can pivot in respect to the frame (3) and a second pivot axis (13) by means of which the soil cultivating unit (2) can pivot in respect to the pivotal side portion (7), both pivot axes (6, 13) extending in the direction of operative travel (A) of the machine, while furthermore the third soil cultivating unit is constituted by a plough (58).

2. A power-driven soil cultivating machine comprising a frame (3), two soil cultivating units (2) for preparing a seed bed, such as rotary harrows, which units are disposed on either side of said frame (3) such that the distance between the units corresponds substantially to the customary width of a tractor (1), and connecting means (3A) for connecting the frame (3) with the said two cultivating units (2) at the front side of the tractor (1), while furthermore a third soil cultivating unit is provided for mounting at the rear side of the tractor (1), whereby for each soil cultivating unit (2) at the front side of the tractor (1) a pivotal side portion (7) is provided to support said soil cultivating unit (2), as well as a first pivot axis (6) by means of which said pivotal side portion (7) with the soil cultivating unit (2) can pivot in respect to the frame (3) and a second pivot axis (13) by means of which the soil cultivating unit (2) can pivot in respect to the pivotal side portion (7), both pivot axes (6, 13) extending in the direction of operative travel (A) of the machine, and a common seed drill is provided for the two soil cultivating units at the front side of the tractor, which seed drill is located between the latter soil cultivating units, while furthermore the third soil cultivating unit comprises a unit for preparig a seed bed (60), such as a rotary harrow, which third soil cultivating unit has a working width which corresponds substantially to the spacing between the respective working width of the two soil cultivating units.

3. A soil cultivating machine as claimed in claim 2, wherein the total working width of the soil cultivating units (2) at the front side of the tractor (1) and the distance between the soil cultivating units (2) is about 6 m.

4. A soil cultivating machine as claimed in claim 2, 3 or 4, characterized in that the said seed drill (33 to 37) is arranged on a frame (3) that also supports the said soil cultivating units (2).

5. A soil cultivating machine as claimed in any one of claims 2 to 4, characterized in that seed coulters (32) are located behind a soil cultivating unit (2) and are connected to a distributor mechanism (34) of the seed drill (33 to 37) via tubes (33).

6. A soil cultivating member as claimed in claim 5, characterized in that the said seed coulters (32) are supported by a carrier (31) which is adjustable about the shafts (23) of a roller (24) which supports a soil cultivating unit (2).

7. A soil cultivating machine as claimed in any one of claims 2 to 6, characterized in that the seed drill (33 to 37) for the soil working units (2) is a pneumatic one in which optionally the distributor mechanism (34) to which the tubes (33) for the seed coulters (32) are connected can be closed for seeding to the left or to the right, respectively.

## Patentansprüche

1. Motorbetriebene Bodenbearbeitungsmaschine mit einem Gestell (3), zwei Bodenbearbeitungseinheiten (2) wie z. B. Kreiseleggen zur Bereitung eines Saatbettes, die beiderseits des Gestells (3) derart angeordnet sind, daß der Abstand zwischen den Einheiten im wesentlichen der üblichen Breite eines Schleppers (1) entspricht, und mit Verbindungsvorrichtungen (3A) zum Verbinden des Gestells (3) mit den beiden Bodenbearbeitungseinheiten (2) an der Frontseite des Schleppers (1), wobei weiterhin eine dritte Bodenbearbeitungseinheit vorgesehen ist, die an die Heckseite des Schleppers (1) anzuschließen ist, wobei für jede an der Frontseite des Schleppers (1) befindliche Bodenbearbeitungseinheit (2) ein schwenkbewegliches Seitenteil (7) zur Abstützung der Bodenbearbeitungseinheit (2) sowie eine erste Schwenkachse (6) vorgesehen ist, mittels der das schwenkbewegliche Seitenteil (7) mit der Bodenbearbeitungseinheit (2) in bezug auf das Gestell (3) schwenken kann, wobei eine zweite Schwenkachse (13) vorhanden ist, mittels der die Bodenbearbeitungseinheit (2) in bezug auf das schwenkbewegliche Seitenteil (7) schwenkbar ist, wobei sich beide Schwenkachsen (6, 13) in Arbeitsrichtung (A) der Maschine erstrecken, und wobei ferner die dritte Bodenbearbeitungseinheit durch einen Pflug (58) gebildet ist.

2. Motorbetriebene Bodenbearbeitungsmaschine mit einem Gestell (3), zwei Bodenbearbeitungseinheiten (2) wie z. B. Kreiseleggen zur Bereitung eines Saatbettes, die beiderseits des Gestells (3) derart angeordnet sind, daß der Abstand zwischen den Einheiten im wesentlichen der üblichen Breite eines Schleppers (1) entspricht, und mit Verbindungsvorrichtungen (3A) zum Verbinden des Gestells (3) mit den beiden Bodenbearbeitungseinheiten (2) an der Frontseite des Schleppers (1), wobei weiterhin eine dritte Bodenbearbeitungseinheit vorgesehen ist, die an die Heckseite des Schleppers (1) anzuschließen ist, wobei für jede an der Frontseite des Schleppers (1) befindliche Bodenbearbeitungseinheit (2) ein schwenkbewegliches Seitenteil (7) zur Abstützung der Bodenbearbeitungseinheit (2) sowie eine erste Schwenkachse (6) vorgesehen ist, mittels der das schwenkbewegliche Seitenteil (7) mit der Bodenbearbeitungseinheit (2) in bezug auf das Gestell (3) schwenken kann, wobei eine zweite Schwenkachse (13) vorhanden ist, mittels der die Bodenbearbeitungseinheit (2) in bezug auf das schwenkbewegliche Seitenteil (7) schwenkbar ist, wobei sich beide Schwenkachsen (6, 13) in Arbeitsrichtung (A) der Maschine erstrecken, wobei für die beiden Bodenbearbeitungseinheiten an der Frontseite des Schleppers eine gemeinsame Drillsaatmaschine vorgesehen ist, die zwischen den Bodenbearbeitungseinheiten angeordnet ist, und wobei ferner die dritte Bodenbearbeitungseinheit durch eine Einheit zur Bereitung eines Saatbettes (60) wie z. B. eine Kreiselegge gebildet ist, die eine Arbeitsbreite hat, welche im wesentlichen dem Abstand zwischen den jeweiligen Arbeitsbreiten der beiden Bodenbearbeitungseinheiten entspricht.

3. Bodenbearbeitungsmaschine nach Anspruch 2,
bei der die Gesamtarbeitsbreite der an der Frontseite des Schleppers (1) befindlichen Bodenbearbeitungseinheiten (2) und der Abstand zwischen den Bodenbearbeitungseinheiten (2) etwa 6 m betragen.

4. Bodenbearbeitungsmaschine nach Anspruch 2, 3 oder 4,
dadurch gekennzeichnet, daß die Drillsaatmaschine (33 bis 37) auf einem Gestell (3) angeordnet ist, das auch die Bodenbearbeitungseinheiten (2) abstützt.

5. Bodenbearbeitungsmaschine nach einem der Ansprüche 2 bis 4,
dadurch gekennzeichnet, daß Säschare (32) hinter einer Bodenbearbeitungseinheit (2) angeordnet und mit einem Verteilermechanismus (34) der Drillsaatmaschine (33 bis 37) über Schläuche (33) verbunden sind.

6. Bodenbearbeitungsmaschine nach Anspruch 5,
dadurch gekennzeichnet, daß die Säschare (32) von einen Träger (31) abgestützt sind, der um die Achsen (23) einer Walze (24) verstellbar ist, welche eine Bodenbearbeitungseinheit (2) abstützt.

7. Bodenbearbeitungsmaschine nach einem der Ansprüche 2 bis 6,
dadurch gekennzeichnet, daß die Drillsaatmaschine (33 bis 37) für die Bodenbearbeitungseinheiten (2) eine pneumatische Drillmaschine ist, bei der der Verteilermechanismus (34), an den die Schläuche (33) für die Säschare (32) angeschlossen sind, zum Säen auf der linken bzw. der rechten Seite wahlweise zu schließen ist.

## Revendications

1. Machine motorisée pour cultiver le sol comprenant un châssis (3), deux unités (2) cultivant le sol pour préparer un lit de semis, telles que des herses rotatives, lesquelles unités sont disposées de part et d'autre dudit châssis (3) de telle sorte que la distance entre les unités corresponde sensiblement à la largeur habituelle d'un tracteur (1), et des moyens de liaison (3A) pour relier le châssis (3) à ces deux unités (2) cultivant le sol à l'avant du tracteur (1), tandis que, de plus, une troisième unité cultivant le sol est prévue pour être montée à l'arrière du tracteur (1), en même temps qu'est prévue, pour chaque unité (2) cultivant le sol à l'avant du tracteur (1), une partie latérale pivotante (7) pour supporter ladite unité (2) cultivant le sol, ainsi qu'un premier pivot (6) au moyen duquel ladite partie latérale pivotante (7) avec l'unité (2) cultivant le sol peut pivoter par rapport au châssis (3), et un deuxième pivot (13) au moyen duquel l'unité (2) cultivant le sol peut pivoter par rapport à la partie latérale pivotante (7), les deux pivots (6, 13) s'étendant dans le sens de marche (A) du travail de la machine, tandis qu'en outre la troisième unité cultivant le sol est constituée par une charrue (58).

2. Machine motorisée pour cultiver le sol comprenant un châssis (3), deux unités (2) cultivant le sol pour préparer un lit de semis, telles que des herses rotatives, lesquelles unités sont disposées de part et d'autre dudit châssis (3) de telle sorte que la distance entre les unités corresponde sensiblement à la largeur habituelle d'un tracteur (1), et des moyens de liaison (3A) pour relier le châssis (3) à ces deux unités (2) cultivant le sol à l'avant du tracteur (1), tandis que, de plus, une troisième unité cultivant le sol est prévue pour être montée à l'arrière du tracteur (1), en même temps qu'est prévue pour chaque unité (2) cultivant le sol à l'avant du tracteur (1), une partie latérale pivotante (7) pour supporter ladite unité (2) cultivant le sol, ainsi qu'un premier pivot (6) au moyen duquel ladite partie latérale pivotante (7) avec l'unité (2) cultivant le sol peut pivoter par rapport au châssis (3), et un deuxième pivot (13) au moyen duquel l'unité (2) cultivant le sol peut pivoter par rapport à la partié latérale pivotante(7), les deux pivots (6, 13) s'étendant dans le sens de marche (A) du travail de la machine, et un semoir commun est prévu pour les deux unités cultivant le sol à l'avant du tracteur, lequel semoir est situé entre ces dernières unités cultivant le sol à l'avant du tracteur, tandis qu'en outre la troisième unité cultivant le sol comprend une unité (60) pour préparer un lit de semis, telle qu'une herse rotative, laquelle troisième unité cultivant le sol a une largeur de travail qui correspond sensiblement à l'espacement entre les largeurs de travail respectives des deux unités cultivant le sol.

3. Machine pour cultiver le sol selon la revendication 2, dans laquelle la largeur totale de travail des unités (2) cultivant le sol à l'avant du tracteur (1) et la distance entre les unités (2) cultivant le sol sont d'environ 6 mètres.

4. Machine pour cultiver le sol selon la revendication 2 ou 3, caractérisée en ce que ledit semoir (33 à 37) est monté sur un châssis (3) qui supporte aussi lesdites unités (2) cultivant le sol.

5. Machine pour cultiver le sol selon l'une quelconque des revendications 2 à 4, caractérisée en ce que des coutres semeurs (32) sont situés derrière une unité (2) cultivant le sol et sont reliés à un mécanisme distributeur (34) du semoir (33 à 37) par des tubes (33).

6. Machine pour cultiver le sol selon a revendication 5, caractérisée en ce que lesdits coutres semeurs (32) sont supportés par un élément porteur (31) qui est réglable autour des arbres (23) d'un rouleau (24) qui supporte une unité (2) cultivant le sol.

7. Machine pour cultiver le sol selon l'une quelconque des revendications 2 à 6, caractérisée en ce que le semoir (33 à 37) pour les unités (2) travaillant le sol est un semoir pneumatique dans lequel, au choix, le mécanisme distributeur (34) auquel sont reliés les coutres semeurs (32) peut être fermé pour semer respectivement à gauche ou à droite.
